# EUROPÄISCHE PATENTSCHRIFT

(11) **EP 2 040 939 B1**
(45) Veröffentlichungstag und Bekanntmachung des Hinweises auf die Patenterteilung: **05.05.2010**
(21) Anmeldenummer: 07785588.0
(22) Anmeldetag: 03.07.2007
(51) Int. Cl.: B60B 33/04, B60B 33/00

(54) **LENKROLLE FÜR VON HAND BEWEGBARE TRANSPORTWAGEN**
CASTER FOR MANUALLY MOVABLE TRANSPORT TROLLEYS
ROUE DE GUIDAGE POUR DES CHARIOTS DE TRANSPORT DEPLAÇABLES MANUELLEMENT

(30) Priorität: 10.07.2006 DE 202006010704 U; 20.01.2007 DE 202007000877 U
(43) Veröffentlichungstag der Anmeldung: 01.04.2009
(73) Patentinhaber: Eberlein, Herbert, 89347 Bubesheim (DE)
(72) Erfinder: Eberlein, Herbert, 89347 Bubesheim (DE)
(86) Internationale Anmeldenummer: PCT/DE2007/001175
(87) Internationale Veröffentlichungsnummer: WO 2008/006341

(56) Entgegenhaltungen:
- WO-A-96/17733
- WO-A-02/092362
- WO-A-2004/005050
- GB-A- 2 085 103

## Beschreibung

Die Erfindung betrifft eine Lenkrolle für von Hand bewegbare Transportwagen, mit einer um eine senkrechte Achse schwenkbaren Radgabel, die ein um eine horizontale Achse drehbares Rad trägt, mit wenigstens einem Nabenkörper, der vom Rad umfasst wird und zusammen mit dem Rad um eine von der Radgabel getragenen Tragachse begrenzt schwenkbar gelagert ist, wobei die Tragachse in einem Abstand zur horizontalen Achse des Rades angeordnet ist, wobei ferner mindestens ein Federelement vorgesehen ist, das mit dem wenigstens einen Nabenkörper in einer die Schwenkbewegung des Nabenkörpers abfedernden Weise zusammenwirkt und wobei die Radgabel mindestens ein in einem Abstand zur Tragachse angeordnetes Widerlagerelement trägt, an dem der wenigstens eine Nabenkörper mit Hilfe des mindestens einen Federelementes abgestützt oder abstützbar ist.

Die WO 02/092362 A1 beschreibt eine Federungseinrichtung, die für eine Lenkrolle bestimmt ist, welche die eben genannten Merkmale aufweist.

Es ist eine von der Firma Wanzl Metallwarenfabrik GmbH in D-89340 Leipheim entwickelte, zur Verwendung an Einkaufs- und Transportwagen bestimmte Lenkrolle bekannt, die als Fahrsteigrolle Typ III bezeichnet in der Lage ist, auf Fahrsteigen eingesetzt zu werden, wie diese in mehrstöckigen Einkaufszentren anzutreffen sind. Die mit einer Radgabel ausgestattete Lenkrolle weist ein Mittelteil auf, auf dem zwei schmale Laufscheiben drehbar gelagert sind. An der Unterseite des Mittelteiles befindet sich ein Bremsteil. Das Mittelteil wird von einer Achse mit quadratischem Querschnitt getragen, wobei die Achse, und damit das Mittelteil, in Verbindung mit den Gabelschenkeln gegen Verdrehen gesichert ist. Bei Bewegen eines mit derartigen Lenkrollen ausgestatteten Einkaufs- oder Transportwagens auf üblicher Fahrbahn rollen die Laufscheiben auf dem Boden. Befährt man hingegen einen Fahrsteig, tauchen die beiden Laufscheiben in die Längsrillen des Fahrsteigbandes ein. Dadurch sinken die Lenkrollen etwas nach unten, bis sie mit ihrem Bremsteil auf den Stegen des Fahrsteigbandes aufsitzen. Dadurch ist der Einkaufs- oder Transportwagen auf dem sich bewegenden Fahrsteigband arretiert und wird von diesem auf- oder abwärts befördert. Die hier beschriebenen Lenkrollen weisen einen nicht zu unterschätzenden Nachteil auf, der darin besteht, dass beim Verlassen des Fahrsteiges eines Einkaufs- oder Transportwagens die noch nicht nach unten abgestützten Laufscheiben der Lenkrollen in einem Winkel gegen die Kammzähne des am Ende des Fahrsteiges befindlichen Kammes prallen, die vom Bremsteil getragene Last übernehmen und dadurch, bedingt durch ihre schmale Ausführung, eine sehr starke Stoßbelastung auf die Kammzähne ausüben. Sind Einkaufs- oder Transportwagen schwer beladen, entwickeln sich sehr hohe Stoßkräfte, die nach und nach die Kammzähne abbrechen lassen. Die Folge ist, dass die beschädigten Kämme durch neue Kämme ersetzt werden müssen, was sich als teuere Angelegenheit erweist. Ein weiterer Nachteil dieser Lenkrolle kann darin gesehen werden, dass die Radachse aus Vierkantstahl gebildet sein muß. Dadurch ist es notwendig, an den Enden dieser Radachse entweder jeweils eine Gewindebohrung oder einen Gewindeansatz vorzusehen, damit die Radachse an den Gabelschenkeln der Lenkrolle befestigt werden kann. Eine derart gestaltete Radachse ist kostenintensiv und verteuert die Herstellkosten der Lenkrolle.

Es ist Aufgabe der Erfindung, eine Lenkrolle der hier vorliegenden Art so weiterzuentwickeln, dass diese bei Einkaufs- oder Transportwagen Verwendung finden kann, um auf den erwähnten Fahrsteigen befördert werden zu können. Dabei sollen die eben beschriebenen Nachteile vermieden werden. Insbesondere soll sichergestellt sein, dass jene Stoßkräfte, die beim Aufprall der Lenkrolle auf die Kammzähne eines Kammes einwirken, sofort und unmittelbar beim Aufprall abgemildert oder gedämpft werden.

Die Lösung der Aufgabe besteht darin, dass das Rad der Lenkrolle durch zwei Laufscheiben gebildet ist, die auf dem wenigstens einen Nabenkörper drehbar gelagert sind, dass der wenigstens eine Nabenkörper ein nach unten gerichtetes Bremsteil trägt und dass die Lage des Bremsteiles in Bezug zur Lage der Tragachse so gewählt ist, dass bei einer Belastung des Bremsteiles das Federlement durch den wenigstens einen Nabenkörper gegen das Widerlagerelement gedrückt wird.

Da das Rad der Lenkrolle durch zwei Laufscheiben gebildet ist, lassen diese sich so schmal ausbilden, dass die beiden Laufscheiben beim Befahren eines Fahrsteiges in die Längsrillen eintauchen, um damit ein Abstützen des Bremsteiles auf den Längsstegen des Fahrsteigbandes zu bewirken. Da das Rad federnd ausgebildet ist, werden beim Befahren auf normalem Boden die auf die schmalen Laufscheiben einwirkenden Stoßkräfte abgefedert und gemildert, so dass der Benutzer eines mit den vorgeschlagenen Lenkrollen ausgestatteten Transportwagens am Griff des Transportwagens nur noch unbedeutend die auf den Transportwagen einwirkenden Stöße wahrnimmt. Aufgrund der federnden Eigenschaften des Rades der Lenkrolle verläuft auch der Bremsvorgang beim Eintauchen der beiden Laufscheiben in die Längsrillen eines Fahrsteiges nicht mehr unvermittelt und stoßartig. Auch hier erfolgt ein zeitlich gestreckter Bremsvorgang, der den Bremsvorgang schonend erfolgen lässt. Verlässt ein mit den vorgeschlagenen Lenkrollen ausgestatteter Transportwagen das Fahrsteigband, stoßen die beiden Laufscheiben einer jeden Lenkrolle an zwei Kammzähne des am Fahrsteigende befindlichen Kammes an. Weil das Rad, und damit die beiden Laufscheiben, federnd ausgebildet ist, erfolgt die auf die Kammzähne einwirkende Stoßbelastung zeitverzögert und deshalb nicht mehr so unvermittelt stoßartig wie bei den eingangs zum Stand der Technik zählenden "Fahrsteigrollen". Die Kammzähne werden geschont und brechen viel seltener, was unnötige Kosten vermeidet. Ferner erfordert die vorgeschlagene Lenkrolle keine Radachse mehr mit quadratischem Querschnitt. Vielmehr kann die kostengünstigere Tragachse mit rundem Querschnitt Verwendung finden. Die vorgeschlagene Lenkrolle weist somit wesentliche Vorteile gegenüber jener Lenkrolle auf, die eingangs als zum Stand der Technik zählend beschrieben worden ist.

Die Erfindung wird anhand eines Ausführungsbeispieles näher erläutert. Es zeigt
Fig. 1 die Lenkrolle im Schnitt sowie
Fig. 2 die Lenkrolle in Seitenansicht auf einem Fahrsteig.

Die Lenkrolle 1 orientiert sich in ihrer Bauweise an jener Lenkrolle, die in der WO 02/092362 A1 ausführlich beschrieben ist.

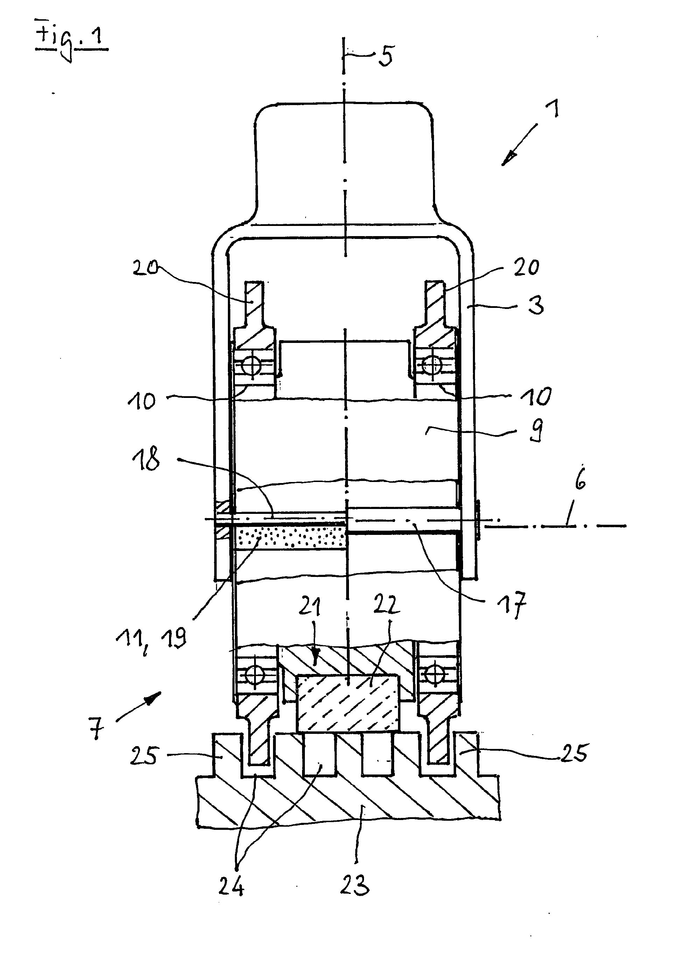

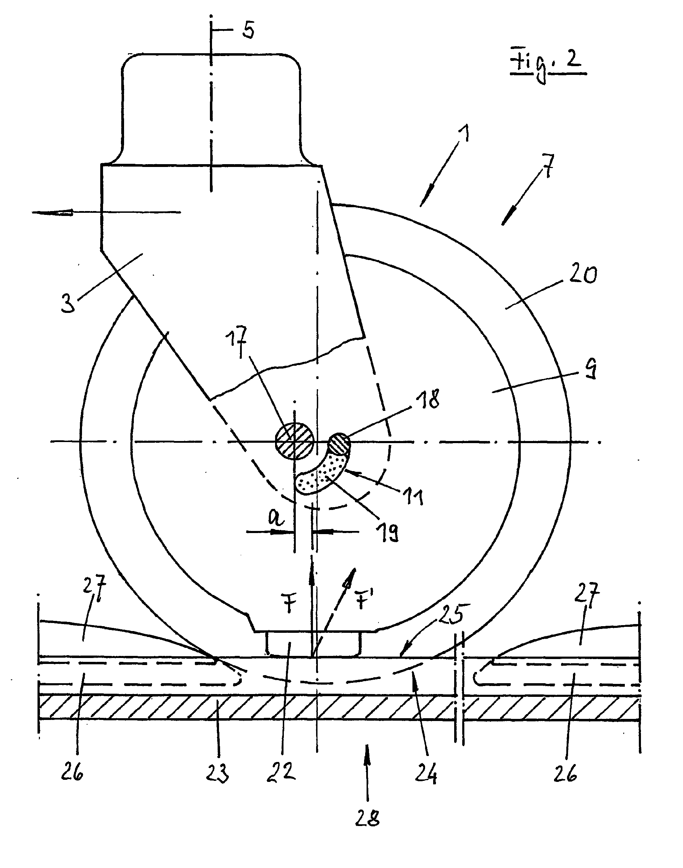

Die in Fig. 1 und 2 beschriebene Lenkrolle 1 ist für den Einsatz bei von Hand bewegbaren Transportwagen bestimmt. Typische Beispiele derartiger Wagen sind Einkaufswagen. Diese Transportwagen lassen sich auf ebenem Gelände bewegen und bei Bedarf auch auf Fahrsteigen transportieren, wie diese von Fall zu Fall in SB-Märkten anzutreffen sind. Die Lenkrolle 1 weist eine Radgabel 3 auf, die sich in bekannter Weise um eine vertikale Achse 5 schwenken lässt. Die Radgabel 3 trägt ein um eine horizontale Achse 6 drehbares Rad 7. In Anlehnung an die WO 02/092362 A1 weist die Lenkrolle 1 wenigstens einen Nabenkörper 9 auf, der vom Rad 7 umfasst wird und zusammen mit dem Rad 7 um eine von der Radgabel 3 getragene Tragachse 17 mit rundem Querschnitt begrenzt schwenkbar gelagert ist. Dabei ist die horizontal angeordnete Tragachse 17 in einem Abstand zur horizontalen Achse 6 des Rades 7 angeordnet. Es ist mindestens ein Federelement 19 vorgesehen, das mit dem wenigstens einen Nabenkörper 9 in einer die Schwenkbewegung des Nabenkörpers 9 abfedernden Weise zusammenwirkt. Das wenigstens eine Federelement 19 befindet sich in bekannter Weise in einem am Nabenkörper 9 befindlichen Raum 11, der von der Seite betrachtet bogenförmig gestaltet ist und konzentrisch zur Tragachse 17 verläuft. Die Radgabel 3 trägt mindestens ein in einem Abstand zur Tragachse 17 angeordnetes Widerlagerelement 18, das in ebenfalls bekannter Weise den am Nabenkörper 9 vorgesehenen Raum 11 horizontal durchdringt und an dem der wenigstens eine Nabenkörper 9 mit Hilfe des mindestens einen Federelementes 19 abgestützt oder abstützbar ist. Der Nabenkörper 9 kann einstückig oder wie durch die senkrechte strichpunktierte Linie angedeutet, auch zweigeteilt sein, wobei in letzterem Falle Mittel vorgesehen sind, welche die beiden Nabenkörper(hälften) 9 zusammenhalten. Alle bis hierher beschriebenen technischen Merkmale sind bekannt. Im Sinne der Erfindung wird nun vorgeschlagen, das Rad 7 durch zwei beabstandete Laufscheiben 20 zu bilden, deren Spurweite so gewählt und deren Breite so bemessen ist, dass die Laufscheiben 20 beim Befahren eines Fahrsteigbandes 23 in die Längsrillen 24 des Fahrsteigbandes 23 eintauchen können. Die beiden kugelgelagerten Laufscheiben 20 sind auf je einem zylindrischen Lagersitz 10 geführt, die beide am wenigstens einen Nabenkörper 9 vorgesehen sind. Ebenfalls im Sinne der Erfindung wird vorgeschlagen, am wenigstens einen Nabenkörper 9 eine Aufnahmeeinrichtung 21 vorzusehen, die dazu dient, ein nach unten gerichtetes Bremsteil 22 zu tragen. Die Funktion des Nabenkörpers 9 wird somit gegenüber dem Stand der Technik erweitert. Das Bremsteil 22 tritt dann in Funktion, wenn die beiden Laufscheiben 20 in den Längsrillen 24 des Fahrsteigbandes 23 eingetaucht sind. Dann nämlich sitzt das Bremsteil 22 auf den Stegen 25 des Fahrsteigbandes 23 auf und arretiert einen mit den erfindungsgemäßen Lenkrollen 1 ausgestatteten Transportwagen. Die Zeichnung zeigt diesen Zustand. Beim Bewegen der Lenkrolle 1 außerhalb eines Fahrsteiges 28 berührt das Bremsteil 22 den Fußboden nicht.

Fig. 2 zeigt die in Fig. 1 beschriebene Lenkrolle 1 auf dem Fahrsteigband 23 eines Fahrsteiges 28 aufsitzend sowie je einen am Beginn und am Ende eines Fahrsteiges 28 angeordneten Kamm 26 mit Kammzähnen 27. In der Zeichnung erkennt man die beiden Laufscheiben 20 der Lenkrolle 1, die in die Längsrillen 24 des Fahrsteigbandes 23 eingetaucht sind. Dadurch sitzt das Bremsteil 22 auf den Stegen 25 des Fahrsteigbandes 23 auf und wird somit belastet. Man erkennt ferner die Tragachse 17, den bogenförmigen Raum 11, das im Raum 11 befindliche Federelement 19 sowie das den Raum 11 durchdringende, in der Radgabel 3 ortsfest abgestützte Widerlagerelement 18. Die Lage des Bremsteiles 22 ist in Bezug zur Tragachse 17 nun so gewählt, dass bei einer Belastung des Bremsteiles 22 das Federelement 19 durch den Nabenkörper 9 gegen das Widerlagerelement 18 gedrückt wird. Die Belastung des Bremsteiles 22 tritt dann auf, wenn die Laufscheiben 20 in den Längsrillen 24 des Fahrsteigbandes eingetaucht sind. Eine Belastung tritt auch dann auf, wenn das Bremsteil 22 in Begriff ist, auf den Stegen 25 des Fahrsteigbandes 23 aufzusitzen. Die in beiden Fällen sich entwickelnde Kraftkomponente F (F') verläuft in einem Abstand zur Tragachse 17. Das Maß a zeigt den Abstand der Kraftkomponente F in statischer Lage der Lenkrolle 1, während strichpunktiert eine Kraftkomponente F' eingezeichnet ist, die sich während des Abbremsvorganges, also beim Aufsetzen des Bremsteiles 22 auf die Stege 25 des Fahrsteigbandes 23 ergibt. Das Aufsetzen erfolgt in bekannter Weise beim Einfahrvorgang eines Transportwagens auf einen Fahrsteig 28. Anhand der Zeichnung kann man sich leicht vorstellen, dass sich in beiden geschilderten Fällen ein auf den Nabenkörper 9 einwirkendes Moment so ergibt, so dass das Federelement 19 durch den wenigstens einen Nabenkörper 9 gegen das Widerlagerelement 18 gedrückt wird. In der Zeichnung ist dieses Moment linksdrehend. Bei einer Belastung des Bremsteiles 22, ob statisch oder dynamisch, ist die Lenkrolle 1 somit in ständiger Federungsbereitschaft, so dass die federnde Wirkung des Rades 7 sofort auch dann eintritt, sobald die beiden Laufscheiben 20 beim Verlassen des Fahrsteigbandes 23 an die gekrümmten Kammzähne 27 des am Ende des Fahrsteiges 28 befindlichen Kammes 26 anstoßen. Die auf die Kammzähne 27 einwirkende Stoßbelastung erfolgt zeitverzögert, das heißt, der Abbau der Stoßkraft erfolgt in einem zeitlichen Abschnitt, so dass die Kammzähne 27 nicht unvermittelt der vollen Wucht ausgesetzt sind und somit geschont bleiben.

## Patentansprüche

1. Lenkrolle (1) für von Hand bewegbare Transportwagen, mit einer um eine senkrechte Achse (5) schwenkbaren Radgabel (3), die ein um eine horizontale Achse (6) drehbares Rad (7) trägt, mit wenigstems einem Nabenkörper (9), der vom Rad (7) umfasst wird und zusammen mit dem Rad (7) um eine von der Radgabel (3) getragenen Tragachse (17) begrenzt schwenkbar gelagert ist, wobei die Tragachse (17) in einem Abstand zur horizontalen Achse (6) des Rades (7) angeordnet ist, wobei ferner mindestens ein Federelement (19) vorgesehen ist, das mit dem wenigstens einen Nabenkörper (9) in einer die Schwenkbewegung des Nabenkörpers (9) abfedernden Weise zusammenwirkt und wobei die Radgabel (3) mindestens ein in einem Abstand zur Tragachse (17) angeordnetes Widerlagerelement (18) trägt, an dem der wenigstens eine Nabenkörper (9) mit Hilfe des mindestens einen Federelementes (19) abgestützt oder abstützbar ist, **dadurch gekennzeichnet, dass** das Rad (7) durch zwei Laufscheiben (20) gebildet ist, die auf dem wenigstens einen Nabenkörper (9) drehbar gelagert sind, dass der wenigstens eine Nabenkörper (9) ein nach unten gerichtetes Bremsteil (22) trägt und dass die Lage des Bremsteiles (22) in Bezug zur Lage der Tragachse (17) so gewählt ist, dass bei einer Belastung des Bremsteiles (22) das mindestens eine Federelement (19) durch den wenigstens einen Nabenkörper (9) gegen das Widerlagerelement (18) gedrückt wird.

2. Lenkrolle nach Anspruch 1, **dadurch gekennzeichnet, dass** die bei Belastung des Bremsteiles (22) auftretende Kraftkomponente F oder F' in einem Abstand zur Tragachse (17) verläuft.

## Claims

1. Steering roller (1) for manually movable transport trolleys, with a wheel fork (3) which is pivotable about a vertical axis (5) and which carries a wheel (7) rotatable about a horizontal axis (6), and with at least one hub body (9) which is surrounded by the wheel (7) and which is mounted pivotably, together with the wheel (7), to a limited extent about a carrying axis (17) carried by the wheel fork (3), the carrying axis (17) being arranged at a distance from the horizontal axis (6) of the wheel (7), furthermore at least one spring element (19) being provided, which cooperates with the at least one hub body (9) in a way cushioning the pivoting movement of the hub body (9), and the wheel fork (3) carrying at least one abutment element (18) which is arranged at a distance from the carrying axis (17) and on which the at least one hub body (9) is supported or can be supported with the aid of the at least one spring element (19), **characterized in that** the wheel (7) is formed by two running discs (20) which are mounted rotatably on the at least one hub body (9), **in that** the at least one hub body (9) carries a downwardly directed brake part (22), and **in that** the position of the brake part (22) with respect to the position of the carrying axis (17) is selected such that, when the brake part (22) is under load, the at least one spring element (19) is pressed against the abutment element (18) by the at least one hub body (9).

2. Steering roller according to Claim 1, **characterized in that** the force component F or F' occurring when the brake part (22) is under load runs at a distance from the carrying axis (17).

## Revendications

1. Rouleau de guidage (1) pour des chariots de transport déplaçables manuellement, comprenant une fourche de roue (3) pouvant pivoter autour d'un axe vertical (5), qui porte une roue (7) pouvant tourner autour d'un axe horizontal (6), avec au moins un corps de moyeu (9), qui est entouré par la roue (7), et qui est monté de manière à pouvoir pivoter dans une mesure limitée conjointement avec la roue (7) autour d'un axe de support (17) porté par la fourche de roue (3), l'axe de support (17) étant disposé à distance de l'axe horizontal (6) de la roue (7), au moins un élément de ressort (19) étant en outre prévu, lequel coopère avec l'au moins un corps de moyeu (9) de manière à amortir le mouvement d'oscillation du corps de moyeu (9) et la fourche de roue (3) portant au moins un élément de butée (18) disposé à distance de l'axe de support (17), sur lequel l'au moins un corps de moyeu (9) est ou peut être supporté à l'aide de l'au moins un élément de ressort (19), **caractérisé en ce que** la roue (7) est formée par deux disques de roulement (20) qui sont montés à rotation sur l'au moins un corps de moyeu (9), **en ce que** l'au moins un corps de moyeu (9) porte une partie de frein (22) orientée vers le bas et **en ce que** la position de la partie de frein (22) par rapport à la position de l'axe de support (17) est choisie de telle sorte que dans le cas d'une sollicitation de la partie de frein (22), l'au moins un élément de ressort (19) soit pressé contre l'élément de butée (18) par l'au moins un corps de moyeu (9).

2. Rouleau de guidage selon la revendication 1, **caractérisé en ce que** la composante de force F ou F' survenant dans le cas d'une sollicitation de la partie de frein (22) s'étend à distance de l'axe de support (17).
